# EUROPÄISCHE PATENTANMELDUNG

(11) **EP 1 223 510 A2**
(43) Veröffentlichungstag der Anmeldung: **17.07.2002**
(21) Anmeldenummer: 01000774.8
(22) Anmeldetag: 19.12.2001
(51) Int. Cl.: G06F 11/14

(54) **Verfahren zur automatischen Wiederherstellung von Daten in einer Datenbasis**

(30) Priorität: 16.01.2001 DE 10101754
(71) Anmelder: SIEMENS AKTIENGESELLSCHAFT, 80333 München (DE)
(72) Erfinder: Neuhaus, Ralf, 44534, Lünen (DE); Uecker, Rainer, 45470, Mühlheim (DE)

(57) **Zusammenfassung**

Infolge eines Ausfalls einer zentralen Datenbasis (ZDB) eines verteilten Kommunikationssystems werden in dezentralen Datenbasen (DB1,...,DB5) gespeicherte übergreifend benötigte Daten automatisch an eine Server-Einheit (DS) des verteilten Kommunikationssystems übermittelt. Die empfangenen übergreifend benötigten Daten werden durch die Server-Einheit (DS) in einer der Server-Einheit (DS) zugeordneten Datenbasis (DB5) zu einer Kopie der zentralen Datenbasis (ZDB) zusammengefügt.

## Beschreibung

Aufgrund einer sehr geringen Ausfallwahrscheinlichkeit bei modernen Kommunikationssystemen werden bei diesen Kommunikationssystemen nur in speziellen Anwendungsfällen Ausfallmechanismen, wie beispielsweise eine doppelte Datenhaltung für den Fall eines Datenverlustes, vorgesehen. Insbesondere bei kleineren und mittleren Kommunikationssystemen ist der mit einer Implementierung von Ausfallmechanismen verbundene Aufwand unverhältnismäßig groß gegenüber dem damit erreichten Nutzen.

Häufig sind moderne Kommunikationssysteme als verteilte Kommunikationssystem ausgestaltet, d.h. die einzelnen Einheiten des Kommunikationssystems - z.B. Kommunikationsserver oder Kommunikationsanlagen - sind über ein Netzwerk miteinander verbunden. Ein derartiges verteiltes Kommunikationssystem ist bereits aus der deutschen Patentanmeldung mit dem amtlichen Anmeldekennzeichen 100 46 319.3 bekannt, wobei die einzelnen Einheiten des Kommunikationsnetzes über ein IPorientiertes Netzwerk miteinander verbunden sind. Das verteilte Kommunikationssystem umfaßt einen zentralen Kommunikationsserver durch den eine Steuerung der Kommunikation zwischen den einzelnen Einheiten, d.h. den Kommunikationsanlagen, des Kommunikationssystems erfolgt.

Hierbei werden übergreifend für alle Einheiten des Kommunikationssystems benötigte Daten in einer zentralen Datenbasis des zentralen Servers gespeichert. Ein Beispiel für derartige in einem verteilten Kommunikationssystem übergreifend benötigte Daten sind beispielsweise sogenannte "Call-Adress-Resolution Daten". Durch diese "Call-Adress-Resolution Daten" erfolgt eine Zuordnung einer IP-Adresse zu einer Rufnummer, wobei die IP-Adresse diejenige Einheit des verteilten Kommunikationssystems eindeutig identifiziert, an der das der Rufnummer zugeordnete Endgerät angeschlossen ist. Fällt nun der zentrale Server aus, stehen die benötigten Informationen im Kommunikationssystem nicht mehr zur Verfügung und eine Kommunikation zwischen den einzelnen Einheiten des verteilten Kommunikationssystems ist nicht mehr möglich.

Um auch bei einem Ausfall des zentralen Servers eine Kommunikation zwischen den Einheiten des Kommunikationssystems ermöglichen zu können, sind in den einzelnen Einheiten des Kommunikationssystems jeweils kleine Speichereinheiten - in der Literatur häufig als Cache-Speicher bezeichnet - vorgesehen, in denen die wichtigsten einheiten-spezifischen Daten gespeichert werden. Hierbei werden jedoch nicht die kompletten Daten gespeichert. Somit ist bei einem totalen Ausfall des Servers eine uneingeschränkte Kommunikation erst wieder nach einer manuellen Wiederinbetriebnahme des zentralen Servers möglich, was in der Regel zu längeren Ausfallbzw. Verzögerungszeiten führt.

Der vorliegenden Erfindung liegt die Aufgabe zugrunde, ein Verfahren anzugeben, durch welches bei einem Ausfall des zentralen Servers eine schnelle Verfügbarkeit von übergreifend benötigten Daten ermöglicht wird.

Die Lösung dieser Aufgabe erfolgt erfindungsgemäß mit den Merkmalen des Patentanspruchs 1.

Ein wesentlicher Vorteil des erfindungsgemäßen Verfahrens besteht darin, daß durch die automatische Erstellung einer Kopie der zentralen Datenbasis in einer dezentralen Datenbasis nach einem Ausfall der zentralen Datenbasis die kompletten übergreifend benötigten Daten ohne großen Aufwand schnell wieder zur Verfügung gestellt werden können.

Ein weiterer Vorteil des erfindungsgemäßen Verfahrens besteht darin, daß ein ständiger Abgleich zwischen den einzelnen Datenbasen des verteilten Kommunikationssystems nicht mehr notwendig ist.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch ein Versenden einer zweiten, die Übernahme einer zentralen Serverfunktion signalisierenden Meldung jede Einheit des verteilten Kommunikationssystems automatisch eine Information darüber erhält, an welcher Stelle im verteilten Kommunikationssystem eine Kopie der zentralen Datenbasis zur Verfügung steht.

Ein Ausführungsbeispiel der Erfindung wird im folgenden anhand der Zeichnung näher erläutert.

Dabei zeigen:
- Fig. 1:: ein Strukturbild zur schematischen Darstellung der am erfindungsgemäßen Verfahren beteiligten wesentlichen Funktionseinheiten; und
- Fig. 2:: ein Ablaufdiagramm zur Veranschaulichung der beim erfindungsgemäßen Verfahren ablaufenden wesentlichen Verfahrensschritte.

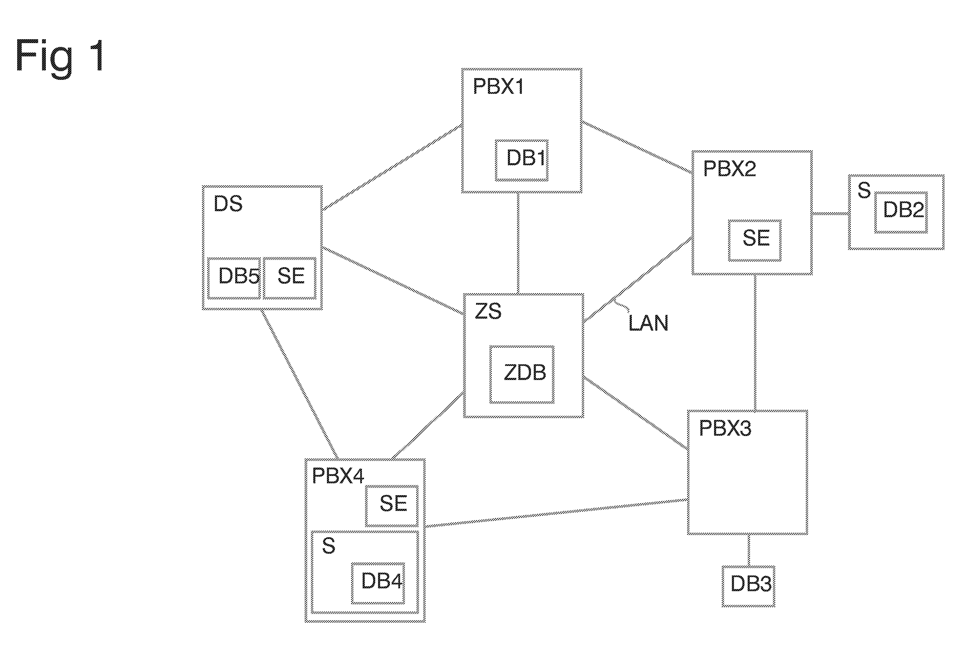

Fig. 1 zeigt ein verteiltes Kommunikationssystem bestehend aus einem zentralen Server ZS und dezentralen Einheiten. Die dezentralen Einheiten umfassen im vorliegenden Ausführungsbeispiel einen dezentralen Server DS und vier Kommunikationsanlagen PBX1,...,PBX4. Die einzelnen Einheiten des verteilten Kommunikationssystems sind dabei über IP-orientierte Verbindungsleitungen, beispielsweise ein lokales Netzwerk LAN, miteinander verbunden.

Der zentrale Server ZS umfaßt eine zentrale Datenbasis ZDB, in der übergreifend für alle Einheiten DS; PBX1,...,PBX4 des verteilten Kommunikationssystems benötigte Daten gespeichert werden. Beispielsweise sind in der zentralen Datenbasis ZDB sogenannte "Call-Adress-Resolution Daten" gespeichert, durch die eine Zuordnung einer IP-Adresse zu einer Rufnummer erfolgt, wobei die IP-Adresse diejenige Einheit des verteilten Kommunikationssystems eindeutig identifiziert, an der das der Rufnummer zugeordnete Endgerät angeschlossen ist.

Des weiteren ist den dezentralen Einheiten DS; PBX1,..., PBX4 jeweils eine lokale Datenbasis DB1,...,DB5 zugeordnet, wobei in den lokalen Datenbasen DB1,...,DB5 sowohl lokal als auch übergreifend benötigte, einheitenspezifische Daten gespeichert werden. Hierbei sind verschiedene Konstellationen zur Anordnung der lokalen Datenbasen DB1,...,DB5 denkbar.

In der ersten Kommunikationsanlage PBX1 ist die lokale Datenbasis DB1 direkt in der Kommunikationsanlage PBX1 integriert. An die zweite Kommunikationsanlage PBX2 ist eine externe Server-Einheit S angeschlossen, wobei die lokale Datenbasis DB2 in der externen Server-Einheit S implementiert ist. Die dritte Kommunikationsanlage PBX3 weist eine externe an die Kommunikationsanlage PBX3 angeschlossene Datenbasis DB3 auf. In der vierten Kommunikationsanlage PBX4 ist ein interne Server-Einheit S implementiert, wobei die lokale Datenbasis DB4 in der internen Server-Einheit S integriert ist. Der dezentrale Server DS umfaßt wiederum eine im dezentralen Server DS implementierte lokale Datenbasis DB5.

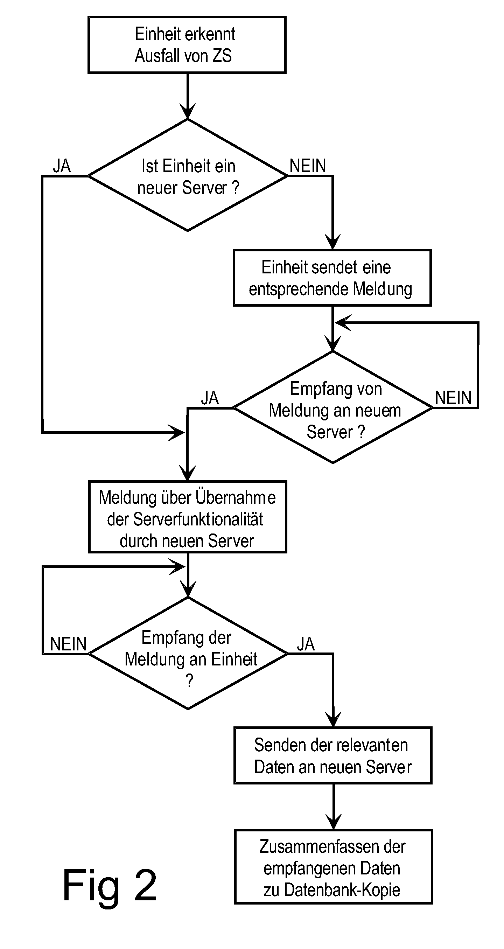

Erfindungsgemäß umfassen diejenigen dezentralen Einheiten DS, PBX2,PBX4 des verteilten Kommunikationssystems die eine Serverfunktionalität aufweisen eine speziell ausgestaltete Steuereinheit SE, deren Funktionalität im folgenden in Zusammenhang mit Fig. 2 näher erläutert wird.

Fig. 2 zeigt ein Ablaufdiagramm zur Veranschaulichung der beim erfindungsgemäßen Verfahren ablaufenden wesentlichen Verfahrensschritte. Erkennt eine dezentrale Einheit - im vorliegenden Ausführungsbeispiel die erste Kommunikationsanlage PBX1 - des verteilten Kommunikationssystems den Ausfall der zentralen Datenbasis ZDB bzw. des zentralen Servers ZS so wird in einem nächsten Schritt überprüft, ob die erste Kommunikationsanlage PBX1 eine Serverfunktionalität aufweist.

Da die erste Kommunikationsanlage PBX1 im vorliegenden Ausführungsbeispiel keine Serverfunktionalität aufweist, sendet die erste Kommunikationsanlage PBX1 eine erste, den Ausfall signalisierende Meldung an alle, eine Serverfunktionalität aufweisenden dezentralen Einheiten DS,PBX2,PBX4 des verteilten Kommunikationssystems. Die erste dezentrale Einheit mit Serverfunktionalität - im vorliegenden Ausführungsbeispiel der dezentrale Server DS - welche die erste Meldung empfängt sendet ihrerseits eine zweite, die Übernahme der zentralen Serverfunktion signalisierende Meldung an alle Einheiten des verteilten Kommunikationssystems.

Eine die zweite Meldung empfangene Einheit PBX1,...,PBX4 des verteilten Kommunikationssystems sendet daraufhin ihre in der jeweiligen lokalen Datenbasis DB1,...,DB4 gespeicherten, übergreifend benötigten Daten an den dezentralen Server DS. Im dezentralen Server DS werden die empfangenen Daten durch die im dezentralen Server DS implementierte Steuereinheit SE anschließend zu einer Kopie der zentralen Datenbank ZDB zusammengefügt. Nach einer erfolgten Zusammenfassung der empfangenen Daten existiert im dezentralen Server DS somit eine automatisch aufgebaute Kopie der zentralen Datenbank ZDB, auf die ab diesem Zeitpunkt alle Einheiten PBX1,...,PBX4 des verteilten Kommunikationssystems zugreifen können bzw. Abfragen dorthin richten können. Durch ein Versenden der zweiten, die Übernahme der zentralen Serverfunktion signalisierenden Meldung erhält jede Einheit des verteilten Kommunikationssystems automatisch eine Information darüber, an welcher Stelle im verteilten Kommunikationssystem eine Kopie der zentralen Datenbasis ZDB erstellt wird.

Alternativ kann die Kopie der zentralen Datenbasis ZDB auch in der externen oder internen Server-Einheit S der zweiten oder der vierten Kommunikationsanlage PBX2, PBX4 aufgebaut werden.

## Patentansprüche

1. Verfahren zur automatischen Wiederherstellung von Daten in einem verteilten Kommunikationssystem,
bei dem infolge eines Ausfalls einer zentralen Datenbasis (ZDB) des verteilten Kommunikationssystems in dezentralen Datenbasen (DB1,...,DB5) gespeicherte übergreifend benötigte Daten automatisch an eine Server-Einheit (DS) des verteilten Kommunikationssystems übermittelt werden, und
bei dem die empfangenen übergreifend benötigten Daten durch die Server-Einheit (DS) in einer der Server-Einheit (DS) zugeordneten Datenbasis (DB5) zu einer Kopie der zentralen Datenbasis (ZDB) zusammengefügt werden.

2. Verfahren nach Anspruch 1,
**dadurch gekennzeichnet,**
**daß** eine den Ausfall der zentralen Datenbasis (ZDB) erkennende Einheit (PBX1) eine erste, den Ausfall signalisierende Meldung an die übrigen Einheiten des verteilten Kommunikationssystems Übermittelt.

3. Verfahren nach Anspruch 2,
**dadurch gekennzeichnet,**
**daß** die erste Meldung nur an Einheiten (DS, PBX2, PBX4) mit Serverfunktion übermittelt wird.

4. Verfahren nach Anspruch 2 oder 3,
**dadurch gekennzeichnet,**
**daß** eine die erste Meldung zuerst empfangende Server-Einheit (DS) eine zweite, die Übernahme einer zentralen Serverfunktion signalisierende Meldung an alle Einheiten des verteilten Kommunikationssystems sendet.

5. Verfahren nach Anspruch 4,
**dadurch gekennzeichnet,**
**daß** in Fällen, in denen die den Ausfall der zentralen Datenbasis (ZDB) erkennende Einheit (PBX1) selbst eine Serverfunktion aufweist, diese Einheit (PBX1) direkt die zweite Meldung versendet.

6. Verfahren nach Anspruch 4,
**dadurch gekennzeichnet,**
**daß** eine die zweite Meldung empfangende Einheit ihre lokal gespeicherten, übergreifend benötigten Daten an die Server-Einheit (DS) übermittelt.

7. Verfahren nach einem der vorhergehenden Ansprüche,
**dadurch gekennzeichnet,**
**daß** ein Zusammenfügen der empfangenen übergreifend benötigten Daten durch eine in der Server-Einheit (DS) implementierte speziell ausgestaltete Steuereinheit (SE) erfolgt.
